# EUROPEAN PATENT SPECIFICATION

(11) **EP 1 188 582 B1**
(45) Date of publication and mention of the grant of the patent: **24.08.2005**
(21) Application number: 01121957.3
(22) Date of filing: 12.09.2001
(51) Int. Cl.: B60B 31/02

(54) **Device for automatically straightening a wheel**
Vorrichtung zum automatischen Richten eines Rades
Dispositif pour redressement automatique d'une roue

(30) Priority: 13.09.2000 NL 1016171
(43) Date of publication of application: 20.03.2002
(60) Divisional application: 05105760.2
(73) Proprietor: HOLLAND MECHANICS B.V., 1442 PZ Purmerend (NL)
(72) Inventor: Begheyn, Richard Petrus, 1444 EA Purmerend (NL); Vermeulen, Eef Peter Frans, 6097 EA Heel (NL)
(74) Representative: Uittenbogaart, Gustaaf Adolf

(56) References cited:
- EP-A- 0 476 749
- EP-A- 0 561 459
- US-A- 5 103 414

## Description

The invention relates to a device according to the preamble of Claim 1. Such devices are known, inter alia from EP 0476749 of the same applicant. The disadvantage of the known device is that different types of wheels usually require different settings of the straightening machine, and that the straightening machine must be reset if a different type of wheel has to be straightened. If it is not reset, all wheels are straightened according to the same setting, with the result that if a mix of different types of wheels are straightened, the quality of the straightened wheels is not optimal.

The object of the invention is to make an improvement in this respect, and to that end the device is designed according to the characterizing part of Claim 1. This ensures that a mix of different types of wheels can be straightened, it being possible for each type of wheel to be straightened with optimum settings for that type of wheel. If desired, the settings are not fixed per type of wheel, but different types of wheel are grouped and such a group of wheels is given the same settings of the straightening machine. In this way, the time for recognizing a type of wheel is shortened, and the resetting time of the straightening machine is also possibly reduced. The result of this is that the speed and the quality of straightening are improved.

According to one embodiment, the device is designed according to Claim 2. This means that the type to which the wheel to be straightened belongs can be determined in the device. By comparing detected data with data in a table, rapid determination of the type of wheel is possible.

According to an improved embodiment, the device is designed according to Claim 3. Through the use of a sensor for determining breadth and/or diameter of the rim, a selection is possible by simple means from all possible types of wheels.

According to an improved embodiment, the device is designed according to Claim 4. By measuring the weight of the wheel, a distinction can be made in a simple manner between the different types of wheels, the different types of hubs in particular leading to a difference in weight.

According to an improved embodiment, the device is designed according to Claim 5. A further distinction between the different types of wheels is possible by determining the number of spokes.

According to an improved embodiment, the device is designed according to Claim 6. This makes determining more detailed differences between the different types of wheels possible, so that more quality differences between different types of wheels are also possible. The result of this is that the straightening can proceed more quickly in a number of cases.

According to one embodiment, the device is designed according to Claim 7. This makes it possible to recognize a code placed on the wheel, so that the type of wheel and/or the quality requirements applying to that wheel are quickly known in the straightening machine.

According to an improvement, the device is designed according to Claim 8. This means that the code can be placed quickly and can also be removed again in a simple manner.

The invention is explained below with reference to a number of exemplary embodiments with the aid of a drawing, in which:
Figure 1 shows a spoked wheel which is to be straightened,
Figure 2 shows a diagrammatic layout of a bicycle factory with wheel assembly machines and a straightening machine, and
Figure 3 shows a diagram indicating the influence that tensioning a spoke has on the lateral run-out.

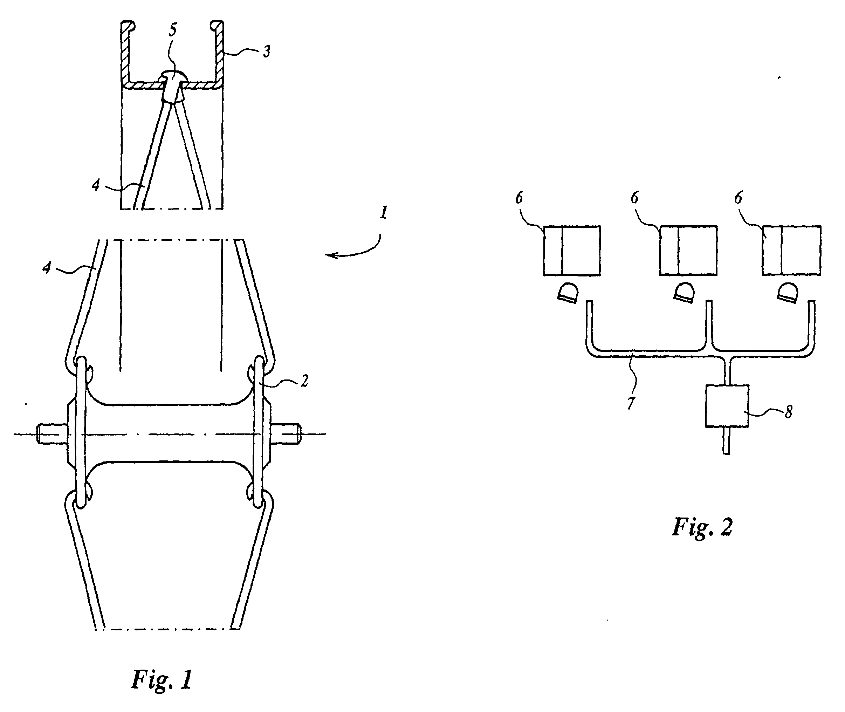

Figure 1 shows a spoked wheel 1, such as a bicycle wheel. Said wheel 1 is composed of a hub 2 and a rim 3, the rim 3 being mounted with a number of spokes 4 on the hub 2. The spokes 4 are fixed in the rim 3 with a nipple 5, which is screwed onto the spoke 4.

The spokes 4 are distributed at regular intervals around the circumference of the rim 3. The position of the rim 3 relative to the hub 2 is determined by the initial shape of the hub 2 and the rim 3, and by the balance between the tensions in the individual spokes and the internal tensions in the rim 3 after the assembly of the wheel 1.

During the rotation of the rim about the axis of rotation of the wheel 1, the rim 3 can wobble parallel to the axis of rotation with a lateral run-out h, and the rim 3 can also wobble in such a way that the distance from the axis of rotation changes with a radial run-out v. Said lateral run-out h and the radial run-out v are undesirable, because during, for example, cycling the rider feels this wobble. In order to reduce this wobble, the wheels are straightened in a straightening machine, such as is described, inter alia, in Application EP-A-0476749. During said straightening, the lateral run-out h and the radial run-out v are reduced by tightening or loosening the nipple 5 until they lie within a set tolerance.

The layout of a bicycle factory is shown in Figure 2, the wheels 1 being assembled from hub, spokes and rim on the wheel assembly machine 6 and subsequently conveyed by way of a conveyor system 7 to an automatic straightening machine 8.

Many types of bicycles are made in a bicycle factory, and therefore many types of wheels 1 are also made, these wheels being manufactured in ever-decreasing runs. The wheels 1 differ, for example, in diameter of the rim 3, in shape and size of the profile of the rim 3, in number of spokes 4, in length, weight and/or colour of the spokes 4, and in type of hub 2. The different types of wheels 1 can also have different tolerances, so that the straightening machine 8 is provided with means for recognizing a certain type of wheel 1. The straightening machine 8 is provided with sensors for this purpose.

The diameter of the wheel 1 or its rim 3 is measured here, for example, by a diameter measurement when the wheel 1 is turning in the straightening machine 8. At the same time, the weight of the wheel 1 can also be measured with a weight sensor in the roller track. The breadth of the rim 3 and the breadth of the hub 2 are measured by clamping the rim 3 and the hub 2 respectively between two linear, movable slides and measuring the positions of the slides with encoders after the clamping. The dimensions can also be obtained by an electromagnetic or optical scan of the wheel 1. If desired, the height of the profile of the rim 3 can also be measured in a comparable way. In addition, the number of spokes and the distance between the individual spokes can be determined by rotating the wheel 1. There is then a sensor for detecting the passage of the spokes, a full revolution being analysed from the already determined diameter and a known circumferential speed.

The data determined by the sensors is compared with the data on the different wheels 1 stored in a database. The measurements of the characteristics of the wheel 1 are carried out in the straightening machine 8 in a very short time in production conditions, so that it must be assumed that there can often be deviations. Therefore, in order still to be able to determine the type of wheel in a reliable way, there is an identification program that compares the measured data with the data stored in the database. The measured data in this case are first provided with a tolerance, and it is subsequently examined what types stored in the database fall within the measured data plus the tolerance for all characteristics. The number of types meeting this requirement is limited. The tolerances are subsequently reduced, possibly differing for the different measurements, and it is examined what type now corresponds most closely to the measured data.

In the exemplary embodiment shown, the sensors used for recognizing the type of wheel form part of the straightening machine 8. It will be clear to the person skilled in the art that these sensors can also form part of the conveyor system 7. This will be the case in particular if several straightening machines 8 are connected to the conveyor system 7.

After the type of wheel 1 present in the straightening machine 8 has been established, the relevant data for this type of wheel 1 is scanned in, and the straightening process can begin. Owing to the fact that the tolerances can also differ for the different types of wheels, the straightening of the wheels for which greater tolerances have been set will be completed more quickly, so that the average capacity of the straightening machine 8 is increased. Among the data becoming available from the database in the straightening machine are, inter alia, the straightening parameters of the wheel 1. Said straightening parameters are the data by which the straightening program of the straightening machine 8 works.

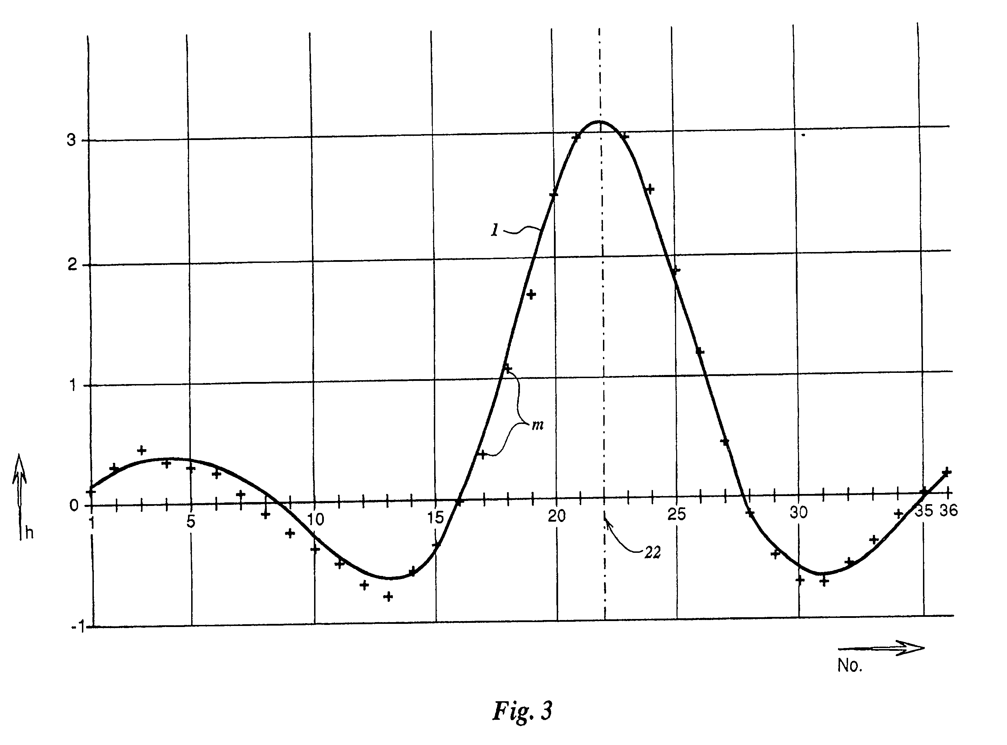

The straightening parameters are determined for each type of wheel 1. During this determination process, a wheel 1 whose lateral run-out h and radial run-out v are minimal are deliberately deformed by tightening and loosening one spoke 4. That spoke can be, for example, a spoke 4 which is situated at an angle of approximately 90° to the radial to the valve hole in the rim 3. This means that the influence of the valve hole is minimal. If in a wheel with 36 spokes the spoke next to the valve hole is spoke 1, then spoke 22, for example, is tightened or loosened. Figure 3 shows the lateral run-out h occurring in the case of different spokes if spoke 22 is screwed five full revolutions tighter. This is indicated for each spoke by point m. Using arithmetical methods, the deformation is approximated by a mathematical formula, indicated by the line 1. Said mathematical formula describes the behaviour of the wheel 1, and in particular the lateral run-out when nipple 5 is tightened. Comparable formulae exist for the lateral run-out when nipple 5 is loosened and for the radial run-out v on tightening and loosening of the nipple 5.

Since the lateral run-out h and the radial run-out v of all spokes have to be measured after tightening and/or loosening of the nipple 5 of spoke 22, this is time-consuming and if it had to be carried out during the straightening, the capacity of the straightening machine 8 would be adversely affected. For that reason, this determination of the characteristics of the wheel 1 is carried out beforehand and the results are recorded as straightening parameters in a database that can be accessed when the type of wheel 1 is known.

During the straightening of a wheel 1 in the straightening machine 8, the type of wheel 1 is determined first of all in the manner described above. The straightening parameters are then retrieved from the database, and the lateral run-out h and the radial run-out v of the wheel 1 are measured. The tension of the spokes 4 may also be measured, for example by measuring the vibration frequency of the spokes 4 after being knocked. By means of the straightening parameters and the measured values, the straightening program calculates the corrections to be made on the wheel 1. These corrections consist of tightening and/or loosening a number of nipples 5. The straightening machine 8 makes these corrections without interim measurements, and the entire wheel 1 is subsequently measured again, and it is checked whether it lies within the tolerances. If desired, the straightening program may calculate again, on the basis of the measured values, the corrections to be made until the wheel 1 lies within the tolerances.

It goes without saying that the straightening program can also be carried out by an apparatus by means of which the lateral run-out h and the radial run-out v can be measured, and in the case of which the straightening is carried out by an operator. The wheel 1 in that case is placed in the apparatus by the operator, and the operator feeds the type of wheel 1 into the control of the apparatus. The deviations are then measured, and the straightening parameters are retrieved from the database. After the straightening program has calculated the corrections to be made, these are shown on the screen and are subsequently made in the wheel by the operator. After all corrections have been made, a new measurement may possibly be carried out as a check.

In the exemplary embodiment shown, the settings of the straightening machine 8 are determined with the aid of the characteristics of the wheel 1 to be straightened, which characteristics are established by one or more sensors. In another embodiment according to the invention, each assembled wheel is given a code that is unique to the wheel, is unique to the bicycle to be made with the wheel, or is unique to the type of wheel. This code can be scanned electronically by means of a scanner, and during or subsequent to the assembly of the wheel is placed on the rim 3 or on a label to be fixed on a spoke 4. A known code is the barcode. The code is scanned into the straightening machine 8, and the straightening machine 8 is set using the information connected with the code.

## Claims

1. Device for automatically straightening spoked wheels (1) with a straightening machine (8), which wheels are composed of, inter alia, a hub (2), a rim (3) and spokes (4), which spokes are fixed with nipples (5) to the rim, the settings of the straightening process in the straightening machine being dependent upon the type of wheel and/or a group of comparable types of wheels, **characterized in that** the device comprises recognition means for automatically recognizing the type of wheel and/or the group of corresponding wheels.

2. Device according to Claim 1, **characterized in that** the recognition means comprise one or more sensors for detecting characteristics of the wheel, a memory for recording characteristics for each type of wheel to be detected with the sensors, and means for comparing detected characteristics with characteristics stored in the memory.

3. Device according to Claim 1 or 2, **characterized in that** the recognition means comprise one or more sensors for measuring the breadth and/or diameter of the rim (3).

4. Device according to Claim 1, 2 or 3, **characterized in that** the recognition means comprise a sensor for measuring the weight of the wheel (1).

5. Device according to one of the preceding claims, **characterized in that** the recognition means comprise means for counting the number of spokes (4) fitted in the wheel to be straightened.

6. Device according to one of the preceding claims, **characterized in that** the recognition means comprise a camera, inter alia for establishing an image and/or the colour of the wheel and/or the hub.

7. Device according to one of the preceding claims, **characterized in that** the recognition means comprise means such as a scanner for detecting a code that is characteristic of the type of wheel and/or of that wheel.

8. Device according to Claim 7, **characterized in that** the code is placed on a carrier fixed on the wheel.

## Patentansprüche

1. Vorrichtung zum automatischen Zentrieren von Speichenlaufrädern (1) mit einer Zentriermaschine (8), wobei die Laufräder aus, unter anderem, einer Nabe (2), einer Felge (3) und Speichen (4) aufgebaut sind, wobei die Speichen mit Nippeln (5) an der Felge befestigt sind, wobei die Einstellungen des Zentriervorgangs in der Zentriermaschine vom Laufradtyp und/oder einer Gruppe vergleichbarer Typen von Laufrädern abhängig sind, **dadurch gekennzeichnet, dass** die Vorrichtung Erkennungsmittel zum automatischen Erkennen des Typs des Laufrads und/oder der Gruppe von entsprechenden Laufrädern umfasst.

2. Vorrichtung nach Anspruch 1, **dadurch gekennzeichnet, dass** die Erkennungsmittel einen oder mehrere Sensoren zum Erfassen von Merkmalen des Laufrads, einen Speicher zum Aufzeichnen der Merkmale jedes Typs von Laufrad, welcher von den Sensoren erfasst werden soll, und Mittel zum Vergleichen der erfassten Merkmale mit den Merkmalen umfassen, die im Speicher aufgezeichnet sind.

3. Vorrichtung nach Anspruch 1 oder 2, **dadurch gekennzeichnet, dass** die Erkennungsmittel einen oder mehrere Sensoren zum Messen der Breite und/oder des Durchmessers der Felge (3) umfassen.

4. Vorrichtung nach Anspruch 1, 2 oder 3, **dadurch gekennzeichnet, dass** die Erkennungsmittel einen Sensor zum Messen des Gewichts des Laufrades (1) umfassen.

5. Vorrichtung nach jedem der vorangehenden Ansprüche, **dadurch gekennzeichnet, dass** die Erkennungsmittel Mittel zum Zählen der Anzahl von Speichen (4) aufweisen, welche im Laufrad, das zentriert werden soll, eingesetzt sind.

6. Vorrichtung nach jedem der vorangehenden Ansprüche, **dadurch gekennzeichnet, dass** die Erkennungsmittel Mittel wie eine Kamera, unter anderem, zum Erzielen eines Bildes und/oder der Farbe des Laufrads und/oder der Nabe umfassen.

7. Vorrichtung nach jedem der vorangehenden Ansprüche, **dadurch gekennzeichnet, dass** die Erkennungsmittel Mittel wie einen Scanner zum Erfassen eines Codes umfassen, welcher charakteristisch für den Typ des Laufrads und/oder das Laufrad ist.

8. Vorrichtung nach Anspruch 7, **dadurch gekennzeichnet, dass** der Code auf einem Träger angeordnet ist, welcher auf dem Laufrad befestigt ist.

## Revendications

1. Dispositif pour redresser automatiquement les roues à rayons (1) avec une machine de redressement (8), lesquelles roues sont composées, entre autres, d'un moyeu (2), d'une jante (3) et de rayons (4), lesquels rayons sont fixés avec des raccords (5) sur la jante, les ajustages du procédé de redressement dans la machine de redressement dépendant du type de roue et/ou d'un groupe de types comparables de roues, **caractérisé en ce que** le dispositif comprend des moyens de reconnaissance pour reconnaître automatiquement le type de roue et/ou le groupe de roues correspondantes.

2. Dispositif selon la revendication 1, **caractérisé en ce que** les moyens de reconnaissance comprennent un ou plusieurs capteurs pour détecter les caractéristiques de la roue, une mémoire pour enregistrer les caractéristiques de chaque type de roue à détecter avec les capteurs, et des moyens pour comparer les caractéristiques détectées avec les caractéristiques enregistrées dans la mémoire.

3. Dispositif selon la revendication 1 ou 2, **caractérisé en ce que** les moyens de reconnaissance comprennent un ou plusieurs capteurs pour mesurer la largeur et/ou le diamètre de la jante (3).

4. Dispositif selon la revendication 1, 2 ou 3, **caractérisé en ce que** les moyens de reconnaissance comprennent un capteur pour mesurer le poids de la roue (1).

5. Dispositif selon l'une des revendications précédentes, **caractérisé en ce que** les moyens de reconnaissance comprennent des moyens pour compter le nombre de rayons (4) montés dans la roue à redresser.

6. Dispositif selon l'une des revendications précédentes, **caractérisé en ce que** les moyens de reconnaissance comprennent une caméra entre autres pour établir une image et/ou la couleur de la roue et/ou du moyeu.

7. Dispositif selon l'une des revendications précédentes, **caractérisé en ce que** les moyens de reconnaissance comprennent des moyens tels qu'un scanner pour détecter un code qui est caractéristique du type de roue et/ou de cette roue.

8. Dispositif selon la revendication 7, **caractérisé en ce que** le code est placé sur un élément porteur fixé sur la roue.
